# EUROPEAN PATENT SPECIFICATION

(11) **EP 0 368 683 B1**
(45) Date of publication and mention of the grant of the patent: **24.01.1996**
(21) Application number: 89311716.8
(22) Date of filing: 13.11.1989
(51) Int. Cl.: G06F 5/06

(54) **Data handling apparatus**
Datenverarbeitungsgerät
Dispositif de traitement de données

(30) Priority: 11.11.1988 JP 285259/88; 11.11.1988 JP 285260/88
(43) Date of publication of application: 16.05.1990
(60) Divisional application: 95110123.7
(73) Proprietor: VICTOR COMPANY OF JAPAN, LIMITED, Kanagawa-ku Yokohama (JP)
(72) Inventor: Toguchi, Satoru, Kanazawa-ku Yokohama (JP); Yamamuro, Fumiko, Naka-ku Yokohama (JP); Tokoro, Kyosuke, Shinjuku-ku Tokyo (JP); Ishida, Satoshi, Yokosuka-shi Kanagawa-ken (JP); Miyasho, Yasuo, Naka-ku Yokohama (JP)
(74) Representative: Senior, Alan Murray

(56) References cited:
- EP-A- 0 144 432
- US-A- 4 037 203
- IBM TECHNICAL DISCLOSURE BULLETIN, vol. 25, no. 11A, April 1983, pages 5481-5483, New York, US; K.G. HALES et al.: "Indexing data transfers"
- COMPUTER DESIGN, vol. 25, no. 6, March 1986, pages 87-92, Littleton, Massachusetts, US; B. WINTERSTEIN: "Cache design boosts SMD disk drive performance"

## Description

This invention relates to data handling apparatus for supplying general data, audio and/or video signals in response to an external demand and in particular to file storing apparatus.

A filing apparatus is known which comprises a magnetic hard disc apparatus storing plural data which are read and served to plural users in parallel and independently.

In the above-mentioned conventional filing apparatus, it is not ensured that stored data is reproduced in real-time mode or reproduced continuously. Thus, "a file system" of Japanese patent application provisional publication No. 62-235673 comprises: a main memory for storing data signals including continuous and real-time information; an M times-speed reproduction circuit for reading the data signal from the main memory at a speed M (M ≥ 2) times that for reproducing the data continuously and in real-time mode; a distribution circuit for output writing signals with M-times speed reproduced data signal divided N; temporary memories for storing the writing signal temporarily; real-time reproducing circuits for reproducing the data from output signals of the temporary memories continuously and in real-time mode; and a control circuit for executing the sequential operation of the above-mentioned main storing, real-time reproduction, distribution, temporary memory, and real-time reproduction circuits. However, there is a drawback that it is difficult to maintain the service for data without waiting when many terminals using the data require access to the filing apparatus at a time because an increase in reading speed is limited. Particularly, if data including real-time information is transmitted in real time base, the above-mentioned drawback is serious because the time rate of occupation of the transmission line by one terminal is high.

EP-A-0144432, on which the precharacterizing portions of appended claims 1 and 2 are based,discloses a memory for use with a numerically controlled apparatus. It discloses a slow memory, such as a bubble memory or disk, from which data is transferred to RAM by means of a DMA. The main processor may then retrieve and perform operations on the data at a high rate.

US-A-4037203 discloses a digital storage system for providing n successive samples of serial data on n parallel paths coincident in time. Storage means store the serial data samples and means are provided which skew and remultiplex the serial data at the output of the storage means.

The present invention has been developed in order to remove the above-described drawbacks inherent to the conventional filing apparatus.

According to the present invention as defined in claim 1 there is provided a data handling apparatus comprising: (a) first storing means for storing data; (b) first reading means responsive to a first control signal for reading out said data stored in said first storing means; (c) second storing means for temporarily storing said data; (d) second reading means responsive to a second control signal for reading out said data stored in said second storing means, said second reading means having a reading speed faster than said first reading means; and (e) writing means responsive to a third control signal for writing said data from said first reading means into said second storing means; characterized in that said first and second reading means are arranged to read out plural sets of data substantially at the same time by time-division reading and said second storing means is arranged to store one or more of said data sets; and characterized by (f) controlling means, responsive to an external signal demanding output of desired data from said data originally stored in said first storing means, to control said first and second reading means and said writing means with said first, second, and third control signals, by detecting the frequency of receiving said external signal, and (1) when said frequency is higher than a given value, producing said first and third control signals at the same time, making an index by storing the name of said desired data when said desired data is written into said second storing means through said writing means, and producing said second control signal to read out said desired data from said second storing means when said name of said desired data is present in said index, and (2) otherwise, producing said first control signal to read out said desired data from said first storing means, when said name of said desired data is absent from said index.

According to the present invention as defined in claim 2 there is also provided a data handling apparatus comprising: (a) first storing means for storing data; (b) first reading means responsive to a first control signal for reading out said data stored in said first storing means; (c) second storing means for temporarily storing said data; (d) second reading means responsive to a second control signal for reading out said data stored in said second storing means; said second reading means having a reading speed faster than said first reading means; and (e) writing means responsive to a third control signal for writing said data from said first reading means into said second storing means; characterized in that said first and second reading means are arranged to read out plural sets of data substantially at the same time by time-division reading and said second storing means is arranged to store one or more of said data sets; characterized by (f) controlling means, responsive to an external signal demanding output of desired data from said data originally stored in said first storing means to control said first and second reading means with said first, second, and third control signals, by detecting the frequency of receiving said external signal for a first interval, and producing said first and third control signals at the same time at every second interval, such that, when the frequency of receiving said external signal is higher than the frequency of receiving external signals for data sets stored in said second storing means, said desired data is stored into said second storing means, making an index by storing a name of said desired data, when said desired data is written into said second storing means through said writing means, and (1) producing said second control signal to read out said desired data when said name of said desired data is stored in said index, and (2) otherwise, producing said first control signal to read out said desired data when said name of said desired data is not stored in said index.

The invention also provides corresponding methods of distributing data and could be embodied in dedicated hardware or in software using suitably programmed microprocessors.

The invention will be further described by way of non-limitative example with reference to the accompanying drawings, in which:-
Fig. 1 is a block diagram of a filing apparatus of first and second embodiments of the invention;
Fig. 2 is a block diagram of reading circuit in Fig. 1;
Fig. 3 shows a waveform for explanation of Fig. 2;
Fig. 4A and 4B are flow charts of the first embodiment;
Fig. 5A and 5B are flow charts of the second embodiment;
Fig. 6 is a block diagram of a filing apparatus useful for an understanding of the present invention by illustrating line 15.

The same or corresponding elements or parts are designated at like references throughout the drawings.

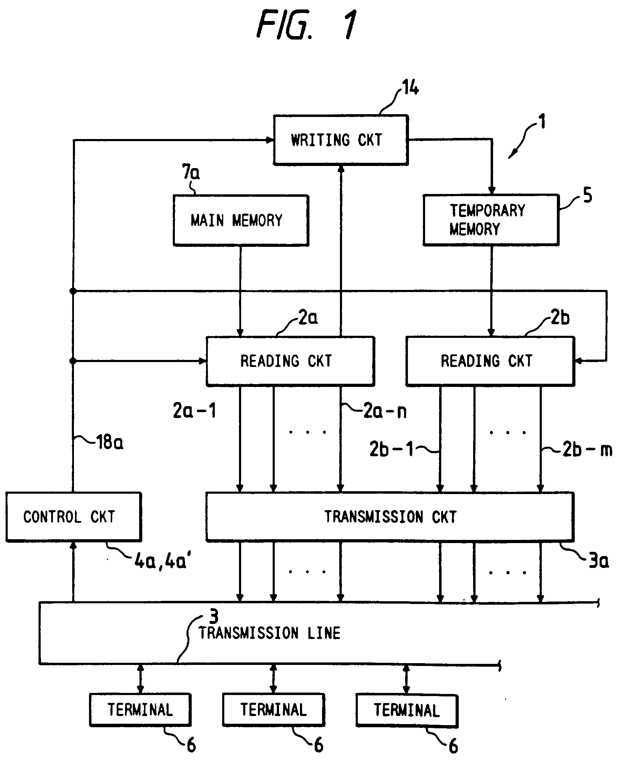

Referring now to the drawings, Fig. 1 is a block diagram of filing apparatus of first and second embodiments of the invention.

In Fig. 1, a main memory (hard disc memory) 7a stores real-time information (data) of music or video image, etc. in every file (unit of storing information). A reading circuit 2a reads data by means of time-divide reading from plural files in the main memory 7a; then time-extends the read data to reproduce a continuous signal of real time base; outputs at plural outputs; and serves the reproduced data through a transmission line 3 via transmission circuit 3a to terminals 6.

The above-mentioned operation is carried out after a terminal 6 sends a demand for a desired data through the transmission line 3 to a control circuit 4a and the control circuit 4a receives the demand. The control circuit 4a has an index which is made when data is stored in the main memory 7a and searches the index for a file of the data demanded for transmission; sends a control signal 18a to the reading circuit 2a to read out data of the desired file to send it to the transmission circuit 3a. As mentioned above, the filing apparatus 1 transmits the desired data read from the main memory 7a in response to a transmission demand from a terminal 6.

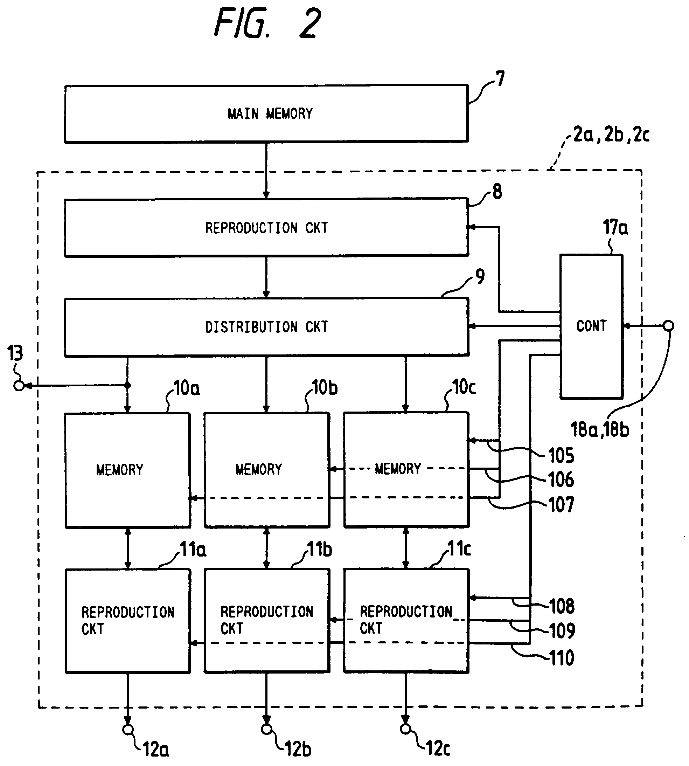

The reading circuits 2a and 2b are described below with referring to Fig. 2 of a block diagram. These reading circuits 2a and 2b have the same structure as that of the "file system" of Japanese patent application provisional publication No. 62-235673. However, there is a difference that an output of the distribution circuit 9 is introduced to a terminal 13 at the reading circuit 2a. The plural sets of data stored in the main memory 7 are read at a speed M times that in real time base by reproduction circuit 8. The distribution circuit 9 distributes plural set of data at output terminals 12a, 12b, and 12c for outputting data signals respectively. The distributed data signals have a form different from the actual one with respect to time base, and they are stored in temporary memories 10a, 10b, and 10c respectively. The stored data signals are extended by real-time reproduction circuits 11a 11b, and 11c temporarily to reproduce the data signals with the real-time base conversion. These data signals are outputted at output terminals 12a, 12b, and 12c respectively. In the real-time memory 2a, the outputs are sent to the transmission circuit 3a through input/output lines 2a-1 to 2a-n. In this first embodiment, the number of the outputs is three. However, the number M can be increased if the reading speed of the main memory 7 is high.

In other words, the number of the outputs is determined by the reading speed of the main memory 7. The controller circuit 17a controls reproduction circuit 8, distribution circuit 9, temporary memories 10a, 10b, and 10c, and real-time reproduction circuits 12a, 12b, and 12c for executing the above-mentioned operation in response to a control signal 18a.

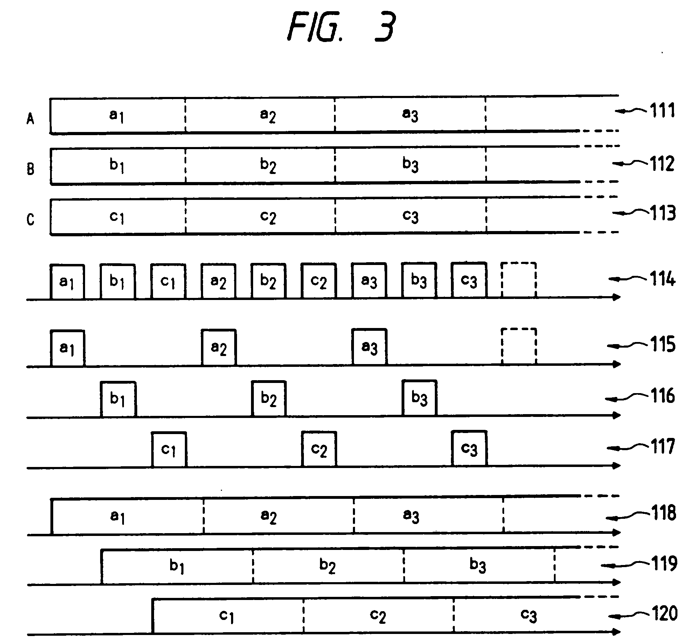

Hereinbelow will be described reproduction operation of the above-mentioned data with reference to Fig. 3. In Fig. 3, the main memory 7 stores data signals (a₁+a₂+a₃+ ···), (b₁+b₂+b₃+ ··· ),(c₁+c₂+c₃+ ··· )[see Fig. 3 waveforms 111 to 113] indicative of data A, B, and C which are to be reproduced continuously in real-time base.

At the first period it reads partial data a₁: at the second period, it reads a partial data b₁: at the third period, it read a partial data c₁. This operation is repeated. In other words, the reproduction circuit 8 reads the above-mentioned data (a₁+a₂+a₃+ ··· ) to (c₁+c₂+c₃+ ··· ) with one data divided by every predetermined interval. The reading speed is more than three times the real-time reading. Therefore, the data A, B, and C are read and reproduced, as shown by a waveform 114 in Fig. 3, including reproduction data signals (a₁, b₁, c₁, a₂, b₂, c₂, a₃, b₃, and c₃, ···).

The distribution circuit 9 distributes data signals (a₁, b₁, c₁, a₂, b₂, c₂, a₃, b₃, and c₃ ,···) read from these reproduction circuit 8 signals to memories 10a, 10b, and 10c respectively, as shown in waveforms 115-117. The memory 10a stores the data signals (a₁+a₂+a₃+ ··· ); the memory 10b stores the data signals (b₁+b₂+b₃+ ··· ); and memory 10c stores the data signals (c₁+c₂+C₃+ ··· ), in response to write command pulses 105, 106, and 107 from the controller 17a.

The reproduction circuits 11a, 11b, and 11c reproduce data signals (a₁+a₂+a₃+ ··· ) to (c₁+c₂+c₃+ ··· ), as follows:

The data signals (a₁+a₂+a₃+ ··· ) respectively are intermittently once stored in the memory 10a and then the reproduction circuit 12a reads the data signals (a₁+a₂+a₃+ ··· ) for the interval of storing the data signals (a₁+a₂+a₃+ ··· ) with time-expanding by read command pulses 114. The write command pulses 105, 106, and 107 for the memories 10a, 10b, and 10c is of frequency three times that of the read command pluses 108, 109, and 110 is. The data signals (a₁+a₂+a₃+ ··· ) read with time-expanding forms a real-time base data signal, as shown by a waveform 118.

Similarly, data signals (b₁+b₂+b₃+ ··· ) and (c₁+c₂+c₃+ ··· ) are temporarily stored in the memories 10a, 10b, and 10c read by the reproduction circuits 12b and 12c respectively.

A signal at the terminal 13 of the reading circuit 2a is sent to the writing circuit 14. The writing circuit 14 stores the signal from the reading circuit 2a at the temporary memory 5 as the second storing means in response to a control signal 18a. The temporary memory 5 is a known solid-state memory. The reading circuit 2b reads out the data stored in the temporary memory 5 in response to the control signal 18a in the same way as the reading circuit 2a does, and the read data is (are) transmitted to a terminal(s) 6 through the transmission line 8 by the transmission circuit 3a. The reading circuit 2b has the same structure as the reading circuit 2a. Generally, the access time of the solid-state memory is very short, so it is possible to output data with dividing more than ten times that of the main memory 7 including a hard disc.

Hereinbelow will be described the control circuit 4a.

The control circuit 4a outputs the control signal 18a for reading out the desired data d in accordance with the result of searching, for the desired data, an index made when the data is stored in the main memory 7. Next, the control circuit 4a counts up an access frequency. In this case, the access frequency f is obtained by counting the number of transmission of the desired data d for a given interval,i.e., transmission frequency T. When the transmission frequency is larger than a reference value, the control circuit 4a outputs the control signal 18a causing the desired data d to be written into the temporary memory 5. When the transmission frequency is smaller than the reference value, the desired data d is not written. When the desired data d is written, the index for the temporary memory 5 is made, and when next transmission demand for the same desired data d, the control circuit 4a sends the control signal 18a to the reading circuit 2b after it searches the index for the desired data registered in the index of the temporary memory 5 that the desired data d is read out.

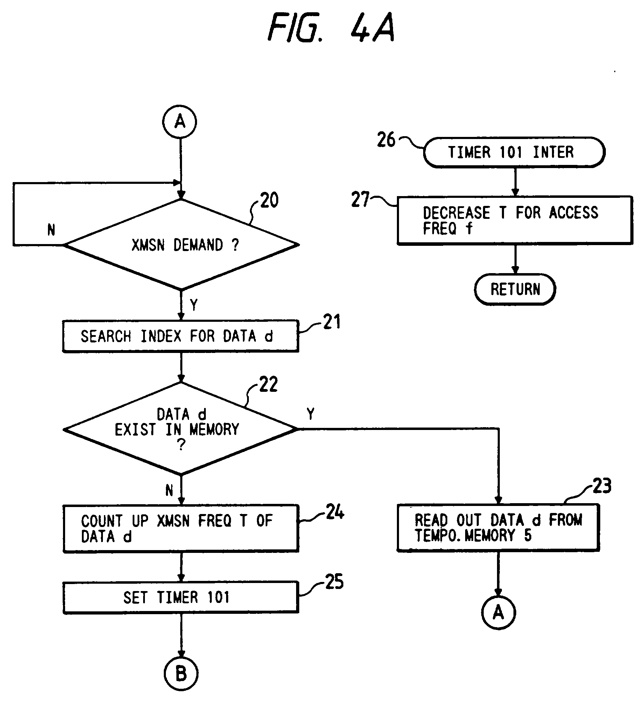

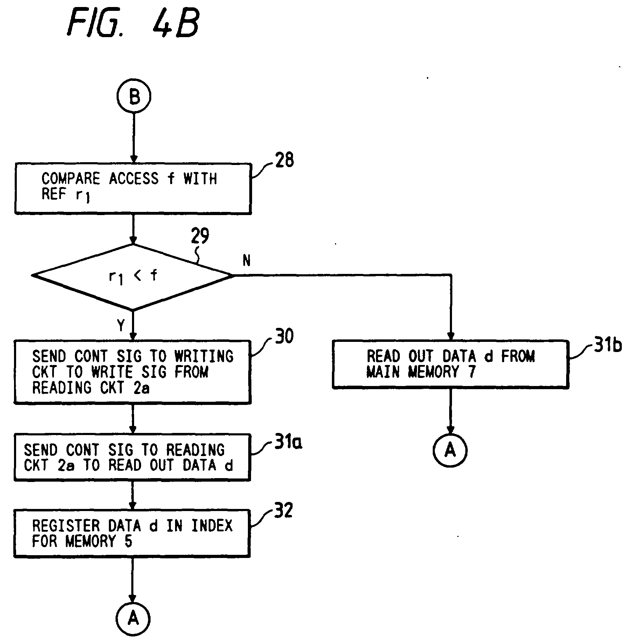

Hereinbelow will be described the above-mentioned operation with reference to a flow chart in Figs. 4A and 4B. The operation of the control circuit 4a is executed by a known microprocessor (cpu) in accordance with the flow chart in Figs. 4A and 4B. In Figs. 4A and 4B, the cpu starts the processing at Ⓐ. At the first step 20, the cpu detects a transmission demand from one of terminals 6 through the transmission line 3. When the demand is detected, at step 21, the cpu detects whether the desired data d exists in the temporary memory 5 in accordance with the index made when the above-mentioned writing operation is carried out. When the desired data d exists in the index of the temporary memory, the desired data d is transmitted to a terminal 6 from the temporary memory 5 at step 23. If the desired data d does not exist, the cpu count up the transmission count by one in step 24. In step 25, the cpu starts a timer 101 to operate and enables tinier 101 interrupt which is one of known functions of the cpu.

When the given interval of the timer 101 passed, in step 26, the cpu starts a timer 101 interrupt processing where the transmission frequency T is decreased by one. This provides the transmission frequency T for a given interval. On the other hand, the processing proceeds to step 28 from step 25 where the access frequency f is compared with a reference value r₁. If f is equal to or smaller than r₁, the cpu sends a control signal 18a to the reading circuit 2a to read out the desired data d at step 31b. If f is larger than r₁, the cpu sends a control signal 18a to writing circuit 14 to write a signal from the reading circuit 2a in step 30. In step 31a, the cpu sends the control signal 18a to read out the desired data d. In step 32, the cpu registers the name d of the desired data d in the index of the temporary memory 5. Therefore, when a demand for transmitting the above-mentioned desired data d occurs, the desired data d can be read out at the reading circuit 2b from the temporary memory 5. The control signal 18a is a coded signal and each of circuits of Fig. 1 executes its own function in response to the control signal 18a.

As mentioned above, the filing apparatus of the first embodiment of the invention can increase the number of transmitting desired data d to plural terminals 6 at the same time by copying data with higher access frequency, stored in the main memory 7 to the temporary memory 5 by writing circuit 14 because reading speed of temporary memory is faster than that of the main memory 7.

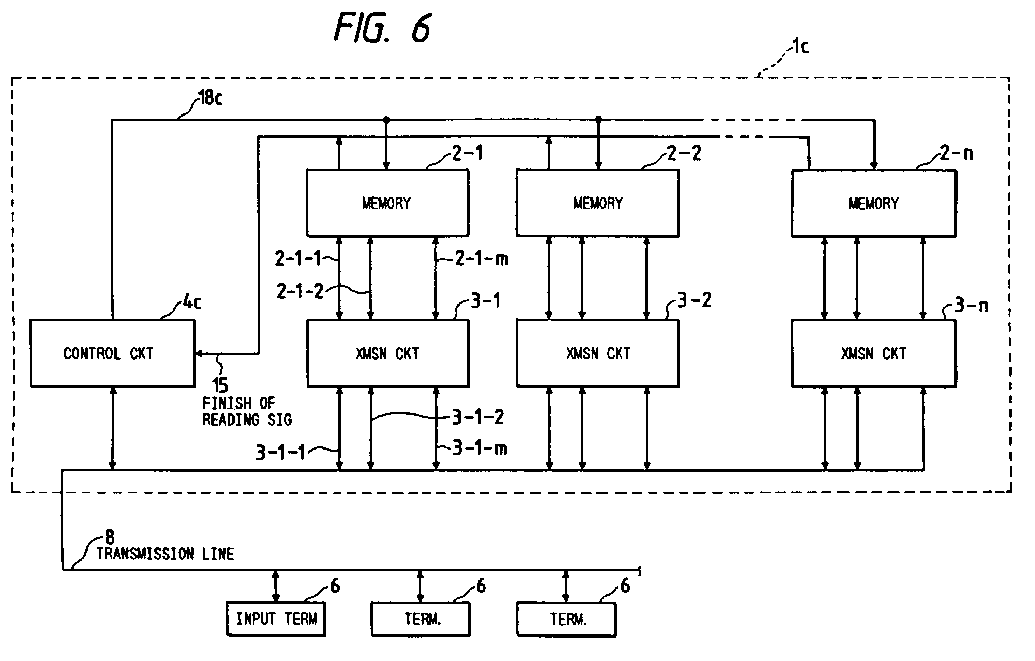

In the above-mentioned embodiment, judgement of block 29 can be done by a present transmission frequency. The present transmission frequency is obtained by that the control circuit 4a enters interrupt processing of block 26 in response to finish of reading signal 15 (see Fig. 6) and sent the data from the reading circuit 2a. Moreover, when access frequency f of data stored in the temporary memory 5 decreases, the data can be written over by other data with higher access frequency. Further, it is possible to write a new data over a data with lower access frequency.

Hereinbelow will be described a second embodiment of the invention.

As the filing apparatus of the second embodiment in structure is the same as that of the first embodiment shown by the block diagram in Fig. 1 except operation of the control circuit 4a. Therefore, a description of structure is omitted except the control circuit 4a'.

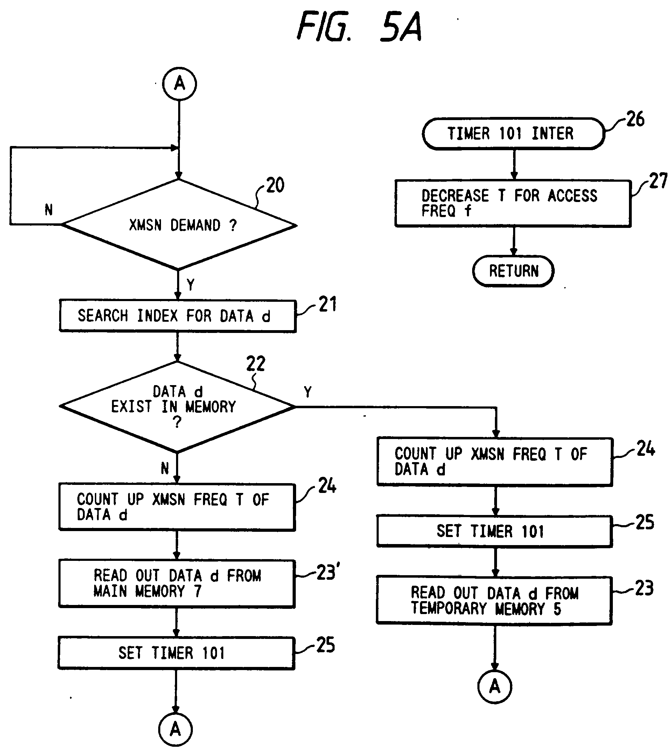

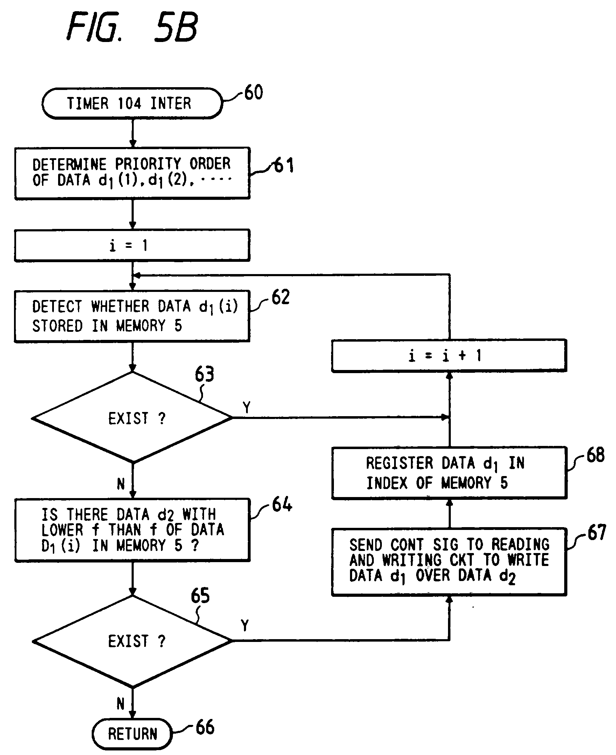

Operation of the control circuit 4a' is described in accordance with a flow chart of Figs. 5A and 5B. The control circuit 4a of the first embodiment writes the desired data d into the temporary memory 5 when access frequency f of the desired data exceeds the reference value r₁. However, in the second embodiment, the cpu writes the data into the temporary memory 5 at every given interval in accordance with access frequency condition. Therefore, description of a flow from steps 20 to 25 is omitted because it is the same as that of Fig. 1. Moreover, steps 24 and 25 are added between steps 22 and 23. These steps provide access frequency when data is outputted from the temporary memory 5.

On the other hand, since copying data into the memory 5 is executed at every given interval, as mentioned above, processing returns to Ⓐ after processing of step 25 Copying data is carried out in response to timer 104 and in accordance with timer 104 interrupt 60, as shown in Fig. 5B. A timer 104 is one of known function of the cpu and set at unshown step for initializing. Therefore, timer 104 interrupt 60 is carried out every given interval. In this processing, the temporary memory 5 stores data d₁ having higher access frequency prior to other data. Firstly, in step 61, the cpu determines a priority order of plural sets of data in the order of high access frequency to low access frequency by comparing the access frequencies f of plural sets of data in the main memory 7 to each other. In step 62, the cpu detects whether the data d₁(i) is stored in the temporary memory 5 by comparing the data d₁(i) with the index of the temporary memory 5 in the order from the data d₁ with higher order. In step 83, if data d₁(i) exists in the temporary memory 5, processing returns to step 62 and the cpu executes processing for data d₁(i+1) with next order. If data d₁ is not stored in the temporary memory 5, in step 64, the cpu detects a data d₂ stored in the temporary memory 5, having a fewer access frequency than that of the data d₁ in step 65. If the data d₂ cannot be detected, processing returns to the main program via step 66. When the data d₂ is detected, the cpu sends the control signal 18a to reading circuit 2a and writing circuit 14 so that they write data d₁ over data d₂, i.e., over-write data d₁(i) in step 67. In step 68, the cpu registers data d₁(i) in the index of the temporary memory 5. After processing of step 68, processing returns to step 62 for processing for the next order data d₂. Above mentioned processing loop is repeated until the temporary memory is full.

As mentioned above, the filing apparatus of the second embodiment of the invention can increase the number of transmitting desired data d at the same time by arranging data with higher access frequency f at every given interval prior to other data, in the temporary memory 5.

## Claims

1. A data handling apparatus comprising:
(a) first storing means (7a) for storing data;
(b) first reading means (2a) responsive to a first control signal (18a) for reading out said data stored in said first storing means (7a);
(c) second storing means (5) for temporarily storing said data;
(d) second reading means (2b) responsive to a second control signal (18a) for reading out said data stored in said second storing means (5), said second reading means (2b) having a reading speed faster than said first reading means; and
(e) writing means (14) responsive to a third control signal (18a) for writing said data from said first reading means (2a) into said second storing means (5); characterized in that
said first (2a) and second (2b) reading means are arranged to read out plural sets of data substantially at the same time by time-division reading and said second storing means (5) is arranged to store one or more of said data sets; and characterized by
(f) controlling means (4a,4a¹), responsive to an external signal demanding output of desired data from said data originally stored in said first storing means (7a), to control said first (2a) and second (2b) reading means and said writing means (14) with said first, second, and third control signals (18a), by
detecting the frequency of receiving said external signal, and
(1) when said frequency is higher than a given value, producing said first and third control signals (18a) at the same time,
making an index by storing the name of said desired data when said desired data is written into said second storing means (2b) through said writing means (14), and
producing said second control signal (18a) to read out said desired data from said second storing means (2b) when said name of said desired data is present in said index, and
(2) otherwise, producing said first control signal (18a) to read out said desired data from said first storing means (2a), when said name of said desired data is absent from said index.

2. A data handling apparatus comprising:
(a) first storing means (7a) for storing data;
(b) first reading means (2a) responsive to a first control signal (18a) for reading out said data stored in said first storing means (7a);
(c) second storing means (5) for temporarily storing said data;
(d) second reading means (2b) responsive to a second control signal (18a) for reading out said data stored in said second storing means (5);
said second reading means (2b) having a reading speed faster than said first reading means (2a); and
(e) writing means (14) responsive to a third control signal (18a) for writing said data from said first reading means (2a) into said second storing means (5); characterized in that
said first (2a) and second (2b) reading means are arranged to read out plural sets of data substantially at the same time by time-division reading and said second storing means (5) is arranged to store one or more of said data sets; characterized by
(f) controlling means (4a,4a¹), responsive to an external signal demanding output of desired data from said data originally stored in said first storing means (7a) to control said first (2a) and second (2b) reading means with said first, second, and third control signals (18a), by
detecting the frequency of receiving said external signal for a first interval, and
producing said first and third control signals (18a) at the same time at every second interval, such that, when the frequency of receiving said external signal is higher than the frequency of receiving external signals for data sets stored in said second storing means (5), said desired data is stored into said second storing means,
making an index by storing a name of said desired data, when said desired data is written into said second storing means through said writing means, and
(1) producing said second control signal (18a) to read out said desired data from said second storing means (2b) when said name of said desired data is stored in said index, and
(2) otherwise, producing said first control signal (18a) to read out said desired data from said first storing means (2a) when said name of said desired data is not stored in said index.

3. A data handling apparatus as claimed in Claim 1 or 2, wherein said reading means further comprises time-expanding means for time-expanding said plural sets of desired data from said storing means so that each time-divided data is continuously outputted.

## Patentansprüche

1. Eine Datenhandhabungsvorrichtung mit:
(a) ersten Speichermitteln (7a), um Daten zu speichern;
(b) ersten Lesemitteln (2a), die auf ein erstes Steuersignal (18a) ansprechen, um die in den ersten Speichermitteln (7a) gespeicherten Daten auszulesen;
(c) zweiten Speichermitteln (5), um die Daten temporär zu speichern;
(d) zweiten Lesemitteln (2b), die auf ein zweites Steuersignal (18a) ansprechen, um die in den zweiten Speichermitteln (5) gespeicherten Daten auszulesen, wobei die zweiten Lesemittel (2b) eine Lesegeschwindigkeit aufweisen, die schneller als die der ersten Lesemittel ist; und
(e) Schreibmitteln (14), die auf ein drittes Steuersignal (18a) ansprechen, um die Daten von den ersten Lesemitteln (2a) in die zweiten Speichermittel (5) zu schreiben;
dadurch gekennzeichnet, daß
die ersten (2a) und zweiten (2b) Lesemittel angeordnet sind, um eine Vielzahl von Datensätzen im wesentlichen gleichzeitig durch Zeitteilungslesen auszulesen, und die zweiten Speichermittel (5) angeordnet sind, um einen oder mehrere der Datensätze zu speichern; und gekennzeichnet durch
(f) Steuermittel (4a, 4a¹), die auf ein externes Signal ansprechen, das einen Ausgang von gewünschten Daten von den ursprünglich in den ersten Speichermitteln (7a) gespeicherten Daten anfordert, um die ersten (2a) und zweiten (2b) Lesemittel und die Schreibmittel (14) mit den ersten, zweiten und dritten Steuersignalen (18a) zu steuern, indem die Frequenz des Empfangs des externen Signals detektiert wird, und
(1) wenn die Frequenz höher als ein gegebener Wert ist, die ersten und dritten Steuersignale (18a) gleichzeitig erzeugt werden,
ein Index gebildet wird, indem der Name der gewünschten Daten gespeichert wird, wenn die gewünschten Daten in die zweiten Speichermittel (2b) durch die Schreibmittel (14) geschrieben werden, und
das zweite Steuersignal (18a) erzeugt wird, um die gewünschten Daten aus den zweiten Speichermitteln (2b) auszulesen, wenn der Name der gewünschten Daten in dem Index vorhanden ist, und
(2) sonst das erste Steuersignal (18a) erzeugt wird, um die gewünschten Daten aus den ersten Speichermitteln (2a) auszulesen, wenn der Name der gewünschten Daten in dem Index nicht vorhanden ist.

2. Eine Datenhandhabungsvorrichtung mit:
(a) ersten Speichermitteln (7a), um Daten zu speichern;
(b) ersten Lesemitteln (2a), die auf ein erstes Steuersignal (18a) ansprechen, um die in den ersten Speichermitteln (7a) gespeicherten Daten auszulesen;
(c) zweiten Speichermitteln (5), um die Daten temporär zu speichern;
(d) zweiten Lesemitteln (2b), die auf ein zweites Steuersignal (18a) ansprechen, um die in den zweiten Speichermitteln (5) gespeicherten Daten auszulesen, wobei die zweiten Lesemittel (2b) eine Lesegeschwindigkeit aufweisen, die schneller als die der ersten Lesemittel (2a) ist; und
(e) Schreibmitteln (14), die auf ein drittes Steuersignal (18a) ansprechen, um die Daten von den ersten Lesemitteln (2a) in die zweiten Speichermittel (5) zu schreiben;
dadurch gekennzeichnet, daß
die ersten (2a) und zweiten (2b) Lesemittel angeordnet sind, um eine Vielzahl von Datensätzen im wesentlichen gleichzeitig durch Zeitteilungslesen auszulesen, und die zweiten Speichermittel (5) angeordnet sind, um einen oder mehrere der Datensätze zu speichern;
gekennzeichnet durch
(f) Steuermittel (4a, 4a¹), die auf ein externes Signal ansprechen, das einen Ausgang von gewünschten Daten von den ursprünglich in den ersten Speichermitteln (7a) gespeicherten Daten anfordert, um die ersten (2a) und zweiten (2b) Lesemittel mit den ersten, zweiten und dritten Steuersignalen (18a) zu steuern, indem
die Frequenz des Empfangs des externen Signals für ein erstes Intervall detektiert wird und
die ersten und dritten Steuersignale (18a) gleichzeitig bei jedem zweiten Intervall derart erzeugt werden, daß, wenn die Frequenz des Empfangs des externen Signals höher als die Frequenz des Empfangs der externen Signale für die in den zweiten Speichermitteln (5) gespeicherten Daten ist, die gewünschten Daten in den zweiten Speichermitteln gespeichert werden,
ein Index gebildet wird, indem ein Name der gewünschten Daten gespeichert wird, wenn die gewünschten Daten in die zweiten Speichermittel (2b) durch die Schreibmittel (14) geschrieben werden, und
(1) das zweite Steuersignal (18a) erzeugt wird, um die gewünschten Daten aus den zweiten Speichermitteln (2b) auszulesen, wenn der Name der gewünschten Daten in dem Index gespeichert ist, und
(2) sonst das erste Steuersignal (18a) erzeugt wird, um die gewünschten Daten aus den ersten Speichermitteln (2a) auszulesen, wenn der Name der gewünschten Daten in dem Index nicht gespeichert ist.

3. Eine Datenhandhabungsvorrichtung wie in Anspruch 1 oder 2 beansprucht, wobei das Lesemittel weiter Zeitexpansionsmittel umfaßt, um die Vielzahl von gewünschten Datensätzen aus den Speichermitteln zeitlich zu expandieren, so daß jedes der zeitgeteilten Daten kontinuierlich ausgegeben wird.

## Revendications

1. Appareil de traitement de données comprenant:
(a) un premier moyen de stockage (7a) pour stocker des données;
(b) un premier moyen de lecture (2a) réagissant à un premier signal de commande (18a) en extrayant lesdites données stockées dans ledit premier moyen de stockage (7a);
(c) un deuxième moyen de stockage (5) pour stocker momentanément lesdites données;
(d) un deuxième moyen de lecture (2b) réagissant à un deuxième signal de commande (18a) en extrayant lesdites données stockées dans ledit deuxième moyen de stockage (5), ledit deuxième moyen de lecture (2b) ayant une vitesse de lecture plus élevée que celle du premier moyen de lecture; et
(e) un moyen d'écriture (14) réagissant à un troisième signal de commande (18a) en inscrivant lesdites données dudit premier moyen de lecture (2a) dans ledit deuxième moyen de stockage (5);
caractérisé en ce que
lesdits premier (2a) et deuxième (2b) moyens de lecture sont agencés de manière à extraire plusieurs ensembles de données sensiblement en même temps par lecture temporelle et ledit deuxième moyen de stockage (5) est agencé de manière à stocker un ou plusieurs ensembles desdites données;
et caractérisé par
(f) un moyen de commande (4a, 4a¹) réagissant à un signal extérieur demandant une sortie de données désirées à partir desdites données initialement stockées dans ledit moyen de stockage (7a) en commandant lesdits premier (2a) et deuxième (2b) moyens de lecture et ledit moyen d'écriture (14) à l'aide des premier, deuxième et troisième signaux de commande (18a), par
détection de la fréquence de réception dudit signal extérieur, et
(1) quand ladite fréquence est plus élevée qu'une valeur donnée, production desdits premier et troisième signaux de commande (18a) simultanément,
formation d'un index par stockage du nom desdites données désirées quand lesdites données désirées sont inscrites dans ledit deuxième moyen de stockage (2b) par l'intermédiaire dudit moyen d'écriture (14),et
production dudit deuxième signal de commande (18a) pour extraire lesdites données désirées dudit deuxième moyen de stockage (2b) quand ledit nom desdites données désirées est présent dans ledit index, et
(2) sinon, production dudit premier signal de commande (18a) pour extraire lesdites données désirées à partir dudit premier moyen de stockage (2a), quand ledit nom desdites données désirées est absent dudit index.

2. Appareil de traitement de données comprenant:
(a) un premier moyen de stockage (7a) pour stocker des données;
(b) un premier moyen de lecture (2a) réagissant à un premier signal de commande (18a) pour extraire lesdites données stockées dans ledit premier moyen de stockage (7a);
(c) un deuxième moyen de stockage (5) pour stocker momentanément lesdites données;
(d) un deuxième moyen de lecture (2b) réagissant à un deuxième signal de commande (18a) en extrayant lesdites données stockées dans ledit deuxième moyen de stockage (5);
ledit deuxième moyen de lecture (2b) ayant une vitesse de lecture plus élevée que ledit premier moyen de lecture (2a); et
(e) un moyen d'écriture (14) réagissant à un troisième signal de commande (18a) en inscrivant lesdites données en provenance dudit premier moyen de lecture (2a) dans ledit second moyen de stockage (5);
caractérisé en ce que
lesdits premier (2a) et deuxième (2b) moyens de lecture sont agencés de manière à extraire plusieurs ensembles de données sensiblement en même temps par lecture temporelle et ledit deuxième moyen de stockage (5) est agencé de manière à stocker un ou plusieurs desdits ensembles de données;
caractérisé par
(f) des moyens de commande (a, 4a¹), réagissant à un signal extérieur demandant une sortie de données désirées à partir desdites données initialement stockées dans ledit premier moyen de stockage (7a) en commandant lesdits premier (2a) et deuxième (2b) moyens de lecture à l'aide desdits premier, deuxième et troisième signaux de commande (18a), par
détection de la fréquence de réception dudit signal extérieur pendant un premier intervalle, et l'
production desdits premier et troisième signaux de commande (18a) simultanément tous les deux intervalles, de telle sorte que, quand la fréquence dudit signal extérieur est plus élevée que la fréquence de réception des signaux extérieurs pour des ensembles de données stockés dans ledit deuxième moyen de stockage (5), lesdites données désirées sont stockées dans ledit deuxième moyen de stockage,
formation d'un index par stockage du nom desdites données désirées, quand lesdites données désirées sont inscrites dans ledit deuxième moyen de stockage par l'intermédiaire dudit moyen d'écriture, et
(1) production dudit deuxième signal de commande (18a) pour extraire lesdites données désirées dudit deuxième moyen de stockage (2b) quand ledit nom desdites données désirées est stockée dans ledit index, et
(2) sinon, production dudit premier signal de commande (18a) pour extraire lesdites données désirées dudit premier moyen de stockage (2a) quand ledit nom desdites données désirées n'est pas stocké dans ledit index.

3. Appareil de traitement de données selon la revendication 1 ou 2, dans lequel ledit moyen de lecture comprend, en outre, un moyen d'expansion dans le temps pour l'expansion dans le temps desdits plusieurs ensembles de données désirées en provenance dudit moyen de stockage de manière que chaque donnée divisée dans le temps soit émise d'une façon continue.
